# EUROPÄISCHE PATENTSCHRIFT

(11) **EP 0 589 461 B1**
(45) Veröffentlichungstag und Bekanntmachung des Hinweises auf die Patenterteilung: **11.03.1998**
(21) Anmeldenummer: 93115378.7
(22) Anmeldetag: 23.09.1993
(51) Int. Cl.: C09K 21/14, C08L 101/00, C08K 3/22, C08K 3/24, C08K 3/34

(54) **Feuerfestes Material, Verfahren zu seiner Herstellung und seine Verwendung**
Refractory material, process for its preparation and its utilisation
Matériau réfractaire, procédé de son préparation et son utilisation

(30) Priorität: 23.09.1992 SI 9200220
(43) Veröffentlichungstag der Anmeldung: 30.03.1994
(73) Patentinhaber: SAVA KRANJ industrija gumijevih, usnjenih in kemicnih, izdelkov n. o. sol. o., SI-64000 Kranj (SI); IZOLIRKA, INDUSTRIJA IZOLACIJSKIH MATERIALOV, SI-61000 Ljubljana (SI)
(72) Erfinder: Munih, Pavel, Dr. Dipl.-Ing., SI-64000 Kranj (SI); Novsak, Albin, Dipl.-Ing., SI-64240 Radovljica (SI)
(74) Vertreter: Grünecker, Kinkeldey, Stockmair & Schwanhäusser Anwaltssozietät

(56) Entgegenhaltungen:
- EP-A- 0 331 358
- DE-A- 3 827 906
- DE-A- 4 033 116
- US-A- 4 869 848
- WORLD PATENTS INDEX LATEST (Online Questel), Accession NO. 90-344 057 DERWENT
- PUBLICATIONS LTD., London
- WORLD PATENTS INDEX LATEST (Online Questel), Accession No. 86-249 878 DERWENT PUBLICATIONS LTD., London

## Beschreibung

Die vorliegende Erfindung betrifft ein neues, flammenhemmendes Material, ein Verfahren zu seiner Herstellung und seine Verwendung, z.B. im Bauwesen, Bergwesen, Schiffbau und in der Fahrzeugindustrie. In diesen Bereichen müssen gemäß den gesetzlichen Vorschriften und Standards flammenhemmende Materialien/Scheidewände eingebaut werden, die im Falle des Brandes denselben begrenzen und dessen Verbreitung verhindern.

Es bestand Bedarf an einem neuen flammenhemmenden Material, dessen Handhabung einfach ist, das man einfach einbauen, anpassen und verformen kann, das bei einer normalen Anwendung und im Falle des Brandes ungiftig, antikorrosiv, feuchtigkeitsunempfindlich bzw. wasserunlöslich und dauerhaft widerstandsfähig und flammenhemmend ist.

Trotz zahlreichen bestehenden Lösungen sind diese oft zu kompliziert und anspruchsvoll, oft sogar ungeeignet.

Die Eigenschaften für flammenhemmende Scheidewände werden durch zahlreiche internationale und nationale Standards vorgeschrieben.

Es sollen nur die gängigsten Standards angegeben werden: DIN 4102, ISO 1182, JUS U.J5.715. Die Qualität der flammenhemmenden bzw. brandfesten Scheidewände wird nach deren Flammfestigkeit bei einer bestimmten, 1000°C übersteigenden Temperatur beurteilt. Dabei wird die Flammenhemmung solcher Scheidewände in Minuten ausgedrückt und deren Wärmeisolationsfestigkeit, d.h. die Verhinderung der Übertragung der Wärmeenergie der Flammen auf eine geschützte Unterlage, die oft eine tragende Unterlage ist, wird beurteilt.

Im allgemeinen bestehen flammenhemmende Systeme aus einem Natur-Mineral-Vermikulit, das ein chemisch hydratisiertes Aluminium-, Eisen- und Magnesiumsilikat ist und aus bestimmten Bindemitteln. Bekannt sind z.B. folgende:
- anorganische Thermoisolationsplatten aus Mineralwolle und Bindemitteln, wie Phenoplasten, z.B.: TERVOL, Hersteller TERMIKA (registriertes Warenzeichen), 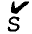 kofja Skofja Loka;
- anorganische Vermikulit-Zement-Kalk Kalkmörtel-Mischungen, die mit Wasser bis zur gewünschten Viskosität gemischt und auf verschiedene Arten aufgetragen werden, abhängig von der Viskosität der Mischungen und der verwendeten Auftrageanlagen;
   Z.B.: Verpas (registriertes Warenzeichen), Hersteller STANDARD OPERATIVA, Ljubljana;
- unbrennbare feste Platten aus Vermikulit und entsprechenden Bindemitteln; die Platten werden nach der Technologie des Holzbearbeitungsverfahrens bearbeitet.
   Z.B.: BREST NEGOR (registriertes Warenzeichen), Hersteller BREST, Cerknica;
- poröse anorganische feste Platten oder Blöcke auf der Basis der Hydrothermalbearbeitung von Silizium- und Calciumoxyd, die als leichte Silikatziegel bearbeitet werden;
   Z.B.: APLAM (registriertes Warenzeichen), Hersteller SALONIT ANHOVO, Anhovo;
- flüssige und Pastenmaterialien auf der Basis anorganischer Füllmittel und Wasserdispersions-Bindemittel, die auf verschiedene Arten gemischt werden, abhängig von deren Viskosität und der verwendeten Auftrageanlagen;
   z.B.: PLAMMAL (registriertes Warenzeichen), Hersteller ADING, Skopje;
- flüssige Materialien auf der Basis anorganischer Füllmittel und organischer Bindemittel, die wie Farben und Beschichtungen appliziert werden;
   Z.B.: PIROSTOP (registriertes Warenzeichen), Hersteller CHROMOS-KATRAN KUTRILIN, Zagreb.

Für die meisten der erwähnten Materialien ist es charakteristisch, daß sie im Falle einer Wärmebeaufschlagung anschwellen und dadurch eine Schutzbarriere bilden, die einen direkten Übertrag der Wärmeenergie der Flammen auf die Unterlage verhindert. In den kritischen Augenblicken ist jedoch ihre Flammenhemmung bzw. ihr Feuerschutz fraglich, da es wegen der verschiedenen Temperatur-Ausdehnungskoeffizienten der Materialien zur Ablösung der Schutz-Scheidewand von der Tragscheidewand und dadurch zur Vernichtung der Schutzfunktion der flammenhemmenden Scheidewand kommt.

Die JP-A-02 247 283 beschreibt ein Verfahren, um ein brennbares Material nicht-brennbar zu machen. Dabei wird ein brennbares Material mit einer Dispersion beschichtet, die einen Modifikator und ein Harz oder Kautschuk enthält. Der Modifikator wird beispielsweise durch Calcinieren eines Gemisches aus mindestens einem anorganischen Pulver und bestimmten Destillationsprodukten in Gegenwart mindestens eines Metalls oder Metalloxids erhalten.

Die JP-A-61 179 290 beschreibt ein feuerfestes Material, das durch Mischen von Kautschuk und/oder synthetischem Harz mit Metallboraten und/oder Metallsilikaten und z.B. Vermiculit erhalten wird.

Die US-A-4 869 848 beschreibt eine flammenhemmende Zusammensetzung, erhalten durch Mischen eines Kautschuks oder Kunststoffs mit Magnesiumhydroxid und Ruß und nachfolgendem Vernetzen des erhaltenen Gemisches.

Die DE-A-3 827 906 beschreibt einen schwerentflammbaren Luftschall-Schutzvorhang aus einer Kautschukmischung, die als Flammschutzmittel Aluminiumhydroxid und übliche Zusätze enthält.

Die EP-A-0 331 358 beschreibt eine flammenhemmende, thermoplastische Elastomerzusammensetzung, die ein thermoplastisches Elastomer auf der Basis von Polyolefin, ein modifiziertes Polyolefin und ein Metallhydrat (z.B. Magnesiumhydroxid oder Aluminiumhydroxid) als Flammschutzmittel enthält.

Aus einer kritischen Analyse der flammenhemmenden Materialien geht ohne Zweifel hervor, daß neue, technisch und funktionell bessere und erfolgreichere Lösungen erforderlich sind.

Es wurde nun gefunden, daß die oben angeführten technischen Probleme durch neue, erfindungsgemäße flammenhemmende Materialien gelöst werden; das Material besteht aus einer Elastomer-Matrix, die ein spezifisches, anorganisches Füllmittel mit zweifacher Funktion enthält:
- die Elastomer-Matrix unbrennbar zu machen,
- dem Material im Laufe der thermischen Zersetzung der Elastomer-Matrix einen Übergang in eine hochtemperaturbeständige, d.h. "keramische Struktur", zu ermöglichen.

Das erfindungsgemäße flammenhemmende Material umfaßt:
100 Masseteile wenigstens eines Elastomers, ausgewählt aus der Gruppe, bestehend aus Natur-, Polyisopren-, Polybutadien-, Isobutylen- und Butyl-Ethylen-Propylen-Elastomeren, und
100 bis 1000 Masseteile eines Alkali-Alumosilikat-Füllmittels.

Bevorzugt enthält das flammenhemmende Material weiterhin Vermikulit mit einer Körnigkeit von 0,01 bis 10 mm, im Verhältnis 100 Masseteile (Elastomer + Alkali-Alumosilikat-Füllmittel) : 5 bis 500 Masseteile des Vermikulits.

Weiterhin kann das flammenhemmende Material Vulkanisierungsmittel , Lösungsmittel und Zusätze zum Einstellen der Viskosität und Konsistenz enthalten.

Die vorliegende Erfindung betrifft weiterhin ein Verfahren zur Herstellung eines neuen flammenhemmenden Materials, umfassend das Einkneten von 100 bis 1000 Masseteilen eines Alkali-Alumosilikat-Füllmittels in 100 Masseteile mindestens eines Elastomers, ausgewählt aus der Gruppe, bestehend aus Natur-, Polyisopren-, Polybutadien-, Isobutylen- und Butyl-Ethylen-Propylen-Elastomeren.

Gegebenenfalls kömmen Vermikulit mit einer Körnigkeit von 0,01 bis 10 mm, im Verhältnis 100 Masseteile (Elastomer + anorganisches Füllmittel) : 5-500 Masseteile Vermikulit, und, falls erforderlich, Vulkanisierungsmittel, Lösungsmittel und Zusätze zum Einstellen der Viskosität und Konsistenz eingeknetet werden.

Im Vergleich mit den schon bestehenden Materialien und Systemen hat das erfindungsgemäße Material folgende Vorteile:
- es kann einfach verformt und angepaßt werden;
- es kann leicht befestigt und auf die Unterlage aufgetragen werden;
- bei einer normalen Anwendung bzw. im Falle des Brandes ist es nicht giftig bzw. es lösen sich keine Giftprodukte auf;
- es ist feuchtigkeitsdicht und löst sich im Wasser nicht auf;
- bei der gleichen Flammenhemmung, mit Ausnahme von PIROSTOP, die maximal 30 Minuten wirkungsvoll ist, sind wesentlich kleinere Stärken erforderlich (Tabelle 1) und daher platzsparend.

**TABELLE 1:**

| Vergleich zwischen der Flammenhemmung des erfindungsgemäßen Materials und auf dem Markt befindlichen Erzeugnissen. | | |
|---|---|---|
| Flammenhemmung (Min.) | Name des Materials oder des Systems | erforderliche Stärke (mm) |
| | PIROSTOP | 1 |
| 30 | VERPAS | 10 |
| | PLAMAL - 30 | 50 |
| | | 20 |
| | | |
| 60 | BREST NEGOR | |
| | APLAM | 45 |
| | TERVOL - PVT | 75 |
| | ELASTOMER-MATERIAL | 6 |

erfindungsgemäß (Beispiel 1)

Die vorliegende Erfindung wird durch folgende Ausführungsbeispiele erläutert.

### BEISPIEL 1

100 Masseteilen Naturkautschuk werden 300 Masseteile einer Alkali-Alumosilikat-Mischung zugegeben. Die Bestandteile werden mit einer Doppelwalze zu einer Elastomermasse gemischt und diese zu einer Platte mit der Stärke von 6 mm verformt. Die flammenhemmende Elastomerplatte wird mit einem Zweikomponenten-Elastomer-Polychloropen-Klebemittel auf eine gereinigte Eisenplatte geklebt; vorher wurden beide Oberflächen mit dem Klebemittel bestrichen und die angetrockneten Oberflächen zusammengegeben. Die Seite, auf der sich die flammenhemmende Elastomer-Platte befindet, wird den Flammen eines Gasbrenners ausgesetzt. Dabei ist mehr als die Hälfte der Elastomer-Mischung unverändert geblieben, und die Temperatur der Metallunterlage hat 300°C nicht überschritten.

### BEISPIEL 2

Auf die flammenhemmende Elastomerplatte gemäß Beispiel 1 wird eine Polyethylen-Folie mit der Dicke von 1 mm aufgebracht, indem die Oberfläche der Elastomer-Platte vorher mit heißer Luft erwärmt und danach die thermoplastische Polyethylen-Folie auf die Elastomer-Platte aufgebügelt wird. Das Laminat wurde dann den Flammen eines Gasbrenners ausgesetzt. Nach zwei Minuten ist die PE-Folie verbrannt und die Elastomer-Platte hat die Rolle der Flammenhemmung wie im Beispiel 1 übernommen.

### BEISPIEL 3

Ein flammenhemmender Kitt wird hergestellt, indem auf 100 Masseteile des Elastomeren 200 Masseteile einer Mischung aus Alkali-Alumosilikat-Füllmittel und gemahlenem Vermikulit mit einer Körnigkeit von 0,1 bis 2 mm gegeben werden. Mit dem auf diese Weise hergestellten Kitt wird eine Fuge gefüllt, die dann den Gasflammen ausgesetzt wird. Der Kitt hat auch nach einer halbstündigen Wärmebelastung die Gasdichtigkeit behalten.

### BEISPIEL 4

Ein flammenhemmender Elastomerüberzug wird hergestellt, indem die Elastomer-Mischung gemäß Beispiel 1 mit Benzin verdünnt wird und der so entstandenen Mischung gemahlener Vermikulit mit einer Körnigkeit von der 0,1 bis 1,0 mm zugegeben wird. Dadurch wird eine Überzugsmasse mit einer entsprechenden Konsistenz erhalten, die dann mit einem Spachtel auf einen Stahlstab mit dem Durchmesser von 14 mm und der Länge von 400 mm aufgetragen wird. Nach einer eintägigen Abtrocknung wird die Flammenhemmung so überprüft, daß der Stab mit Hilfe eines Hebels mit einer Kraft von 100 N/mm² im Abstand von 400 mm vom Einspannpunkt belastet und der mit dem erfindungsgemäßen Überzug geschützte Stab mit der Flamme im Abstand von 200 mm vom Einspannpunkt erwärmt wird. Der ungeschützte Stab hat sich nach 2,5 Minuten gekrümmt, der mit dem Elastomerüberzug geschützte Stab hat jedoch auch nach einer halbstündigen Feuerbelastung seine elastischen Eigenschaften behalten.

## Patentansprüche

1. Flammenhemmendes Material, umfassend:
100 Masseteile wenigstens eines Elastomers, ausgewählt aus der Gruppe, bestehend aus Natur-, Polyisopren-, Polybutadien-, Isobutylen- und Butyl-Ethylen-Propylen-Elastomeren, und
100 bis 1000 Masseteile eines Alkali-Alumosilikat-Füllmittels.

2. Flammenhemmendes Material nach Anspruch 1, weiterhin enthaltend Vermikulit mit einer Körnigkeit von 0,01 bis 10 mm, im Verhältnis 100 Masseteile (Elastomer + Alkali-Alumosilikat-Füllmittel) : 5 bis 500 Masseteile des Vermikulits.

3. Verfahren zur Herstellung eines flammenhemmenden Materials, umfassend das Einkneten von 100 bis 1000 Masseteilen eines Alkali-Alumosilikat-Füllmittels in 100 Masseteile mindestens eines Elastomers, ausgewählt aus der Gruppe, bestehend aus Natur-, Polyisopren-, Polybutadien-, Isobutylen- und Butyl-Ethylen-Propylen-Elastomeren.

4. Verfahren nach Anspruch 3, weiterhin umfassend das Einkneten von Vermikulit mit einer Körnigkeit von 0,01 bis 10 mm, im Verhältnis 100 Masseteile (Elastomer + Alkali-Alumosilikat-Füllmittel) : 5 bis 500 Masseteile des Vermikulits.

5. Verwendung des flammenhemmenden Materials nach Anspruch 1 oder 2 zur Herstellung von flammenhemmenden Scheidewänden.

## Claims

1. Flame-retardant material, comprising:
100 parts by weight of at least one elastomer selected from the group consisting of natural elastomers, polyisoprene elastomers, polybutadiene elastomers, isobutylene elastomers and butyl-ethylene-propylene elastomers, and
from 100 to 1000 parts by weight of an alkali metal aluminosilicate filler.

2. Flame-retardant material according to Claim 1, comprising, in addition, vermiculite with a particle size of from 0.01 to 10 mm, in a ratio of 100 parts by weight (elastomer + alkali metal aluminosilicate filler): from 5 to 500 parts by weight of the vermiculite.

3. Process for producing a flame-retardant material, which comprises incorporating, by compounding, from 100 to 1000 parts by weight of an alkali metal aluminosilicate filler into 100 parts by weight of at least one elastomer selected from the group consisting of natural elastomers, polyisoprene elastomers, polybutadiene elastomers, isobutylene elastomers and butyl-ethylene-propylene elastomers.

4. Process according to Claim 3, which further comprises incorporating, by compounding, vermiculite with a particle size of from 0.01 to 10 mm, in a ratio of 100 parts by weight (elastomer + alkali metal aluminosilicate filler): from 5 to 500 parts by weight of the vermiculite.

5. Use of the flame-retardant material according to Claim 1 or 2 for producing fire-resistant partition walls.

## Revendications

1. Matériau ignifuge comprenant :
- 100 parties en poids d'au moins un élastomère, choisi dans le groupe des élastomères naturels, des élastomères polyisoprènes, des élastomères polybutadiènes, des élastomères d'isobutylène et des élastomères de butylène, d'éthylène et de propylène, et
- 100 à 1000 parties en poids de silicate d'aluminium alcalin à titre de charge.

2. Matériau ignifuge selon la revendication 1, contenant également de la vermiculite de granulométrie comprise entre 0,01 à 10 mm, selon une proportion de 5 à 500 parties en poids de vermiculite pour 100 parties en poids (élastomère + charge de silicate d'aluminium alcalin).

3. Procédé pour la fabrication d'un matériau ignifuge, comprenant le malaxage de 100 à 1000 parties en poids d'une charge de silicate d'aluminium alcalin dans 100 parties en poids d'au moins un élastomère, choisi dans le groupe des élastomères naturels, des élastomères polyisoprènes, des élastomères polybutadiènes, des élastomères d'isobutylène et des élastomères de butylène, d'éthylène et de propylène.

4. Procédé selon la revendication 3, comprenant en outre le malaxage de la vermiculite ayant une granulométrie comprise entre 0,01 et 10 mm, dans une proportion de 5 à 500 parties en poids de vermiculite pour 100 parties en poids (élastomère + charge de silicate d'aluminium alcalin).

5. Utilisation du matériau ignifuge selon la revendication 1 ou 2 pour la fabrication de cloisons ignifuges.
